# EUROPEAN PATENT APPLICATION

(11) **EP 1 484 770 A1**
(43) Date of publication of application: **08.12.2004**
(21) Application number: 04251597.3
(22) Date of filing: 19.03.2004
(51) Int. Cl.: G21F 9/30, C03B 5/027, C03B 5/44, C03B 5/26, C03B 5/00, F27B 14/06, F27D 3/15, F27D 9/00

(54) **Glass melter and method for operating the same**

(30) Priority: 04.06.2003 JP 2003159335
(71) Applicant: Japan Nuclear Cycle Development Institute, Ibaraki 319-1184 (JP); Ishikawajima-Harima Heavy Industries Co., Ltd., Chiyoda-ku, Tokyo 100-8182 (JP)
(72) Inventor: Aoshima, Atsushi, c/o Tokai Works of Japan, Tokai-mura Naka-gun Ibaraki 311-1194 (JP); Kodaka, Akira, c/o Tokai Works of Japan, Tokai-mura Naka-gun Ibaraki 311-1194 (JP); Fukui, Toshiki, c/o Ishikawajima-Harima Heavy, Chiyoda-ku Tokyo 100-8182 (JP); Yamasaki, Akito, c/o Ishikawajima-Harima Heavy, Chiyoda-ku Tokyo 100-8182 (JP)
(74) Representative: Jennings, Nigel Robin

(57) **Abstract**

A glass melter is constituted by a furnace body 16 capable of retaining molten glass G in the body, an outer shell 21 with a cooling jacket 33 for surrounding the furnace body 16 and electrodes 22 with lower ends immersible in the molten glass G in the furnace body 16.
A cooling medium is fed to the cooling jacket 33 to provide a solidified glass layer S between the furnace body 16 and the molten glass G, which prevents the furnace body 16 from being corroded by the molten glass G.

## Description

### Background of the Invention

High-level radioactive liquid waste, which results from reprocessing of spent fuel, is subjected to vitrification treatment in a liquid waste treatment system and is stored in waste storage equipment.

A conventional glass melter in a liquid waste treatment system is shown, for example, in Japanese Patent 2581836 (JP4-161897A).

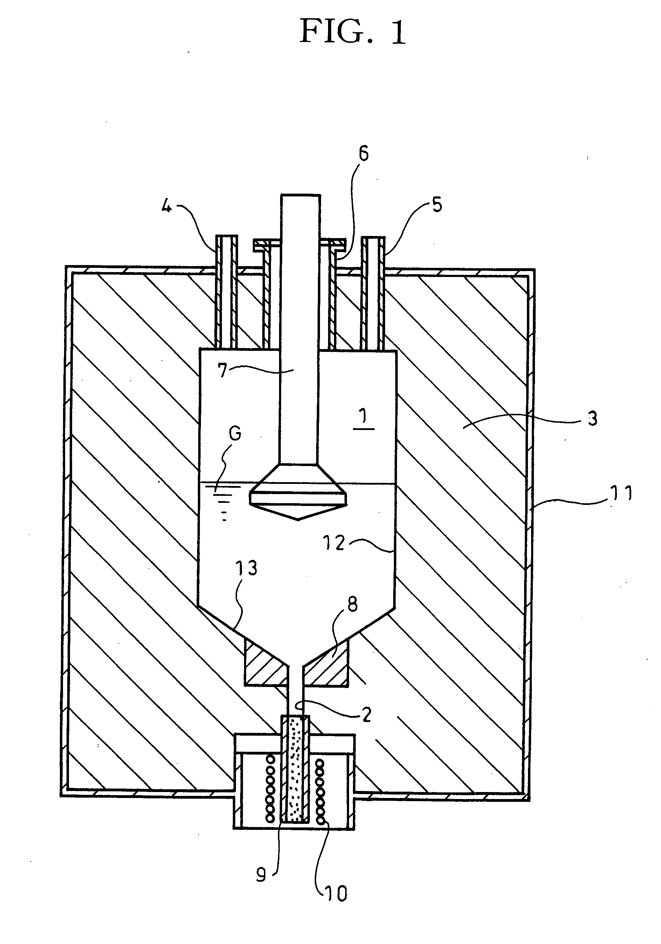

This glass melter comprises, as shown in Fig. 1, a furnace body 3 which is a composite structure of refractory and thermal insulating materials for providing a melt space 1 capable of retaining molten glass G and which has an outflow port 2 at its bottom, a material feed nozzle 4 and an off gas nozzle 5 and an electrode holder 6 each of which extends through a top of the furnace body 3 in communication with the space 1, an upper electrode 7 held in the holder 6 with its lower end being immersed in the molten glass G retained in the space 1, a lower electrode 8 incorporated in the furnace body 3 on its inner bottom center, a drain nozzle 9 on a bottom of the furnace body 3 and contiguous with the port 2, an induction heating coil 10 circumferentially surrounding the nozzle 9, and an outer shell 11 housing the furnace body 3.

The furnace body 3 has an inner cylindrical wall 12 and an inner funnel-shaped bottom wall 13 contiguous with an lower edge of the wall 12; the space 1 is confined by these walls 12 and 13.

In the glass melter shown in Fig. 1, vitrifiable material (material to be melted into the molten glass G) is supplied from the nozzle 4 to the space 1 and is melted by an indirect heater (not shown) associated with the furnace body 3 while electric current is passed between the electrodes 7 and 8 via the molten glass G to keep hot the molten glass G by Joule heat for prevention of the molten glass G from being vitrified.

Outflow of the molten glass G from the space 1 is prevented because of vitrification in the nozzle 9.

In this state, the vitrifiable material is fed through the nozzle 4 to the space 1 to be melted into the molten glass G and then liquid waste from wet reprocessing of spent fuel is fed through the nozzle 4 to the space 1 to admix with the molten glass G.

When the liquid waste is to be subjected to vitrification treatment, electrical current is passed between the electrodes 7 and 8 via the molten glass G to elevate overall temperature of the molten glass G for the purpose of making viscosity of the molten glass G suitable for flowing-down, and a canister (not shown) is positioned just below the nozzle 9.

Then, electric current is passed through the coil 10 to heat the nozzle 9 and melt the solidified glass in the nozzle 9, so that the molten glass G mixed with the liquid waste is allowed to flow down from the space 1 through the nozzle 9 to the canister.

When an amount of the molten glass G with which the canister has been filled substantially approaches to a predetermined value, heating of the nozzle 9 by the coil 10 is stopped and, as needs demands, air is blown from an air injection pipe (not shown) to the nozzle 9.

This causes re-vitrification in the nozzle 9 and the molten glass G is prevented from flowing down through the nozzle 9.

However, in the glass melter shown in Fig. 1, the electrodes 7 and 8 and the refractory material of the furnace body 3 are corroded by the hot molten glass G, which reduces a service life of the melter to about 5 years. Replacement of the melter brings about a great amount of waste.

Moreover, platinum metals contained in the high-level radioactive liquid waste are accumulated on the inner bottom of the furnace body 3, which hinders flow-down of the molten glass G.

The present invention was made in view of the above and has its object to provide a glass melter of long service life.

### Summary of the Invention

In order to attain the above-mentioned object, the invention provides a glass melter comprising a furnace body capable of retaining molten glass therein, an outer shell with a cooling jacket for surrounding said furnace body and a pair of vertically extending electrodes with lower ends immersible in the molten glass in the furnace body.

More specifically, electric current is passed between the paired electrodes via the molten glass retained in the furnace body so as to keep hot the molten glass; cooling medium is passed through the cooling jacket to provide a solidified glass layer on an inside of the furnace body so as to suppress the furnace body from being corroded by the hot molten glass.

The glass melter may further comprise a drain nozzle extending downward from an inner bottom of the furnace body, means for heating said nozzle and a saucer member removably fitted to the inner bottom of the furnace body and having an outflow port contiguous with the nozzle.

As a result, passing of the cooling medium to the cooling jacket may be stopped to melt the solidified glass layer, and further the nozzle may be heated to discharge outside the molten glass and platinum metals in the furnace body.

### Brief Description of the Drawings

Fig. 1 is a schematic view showing a conventional glass melter;
Fig. 2 is a schematic view showing an embodiment of a glass melter according to the invention;
Fig. 3 is a perspective view showing a saucer member in connection with Fig. 2; and
Fig. 4 is a schematic view showing a further embodiment of a glass melter according to the invention.

### Description of the Preferred Embodiments

Embodiments of the invention will be described in conjunction with the drawings.

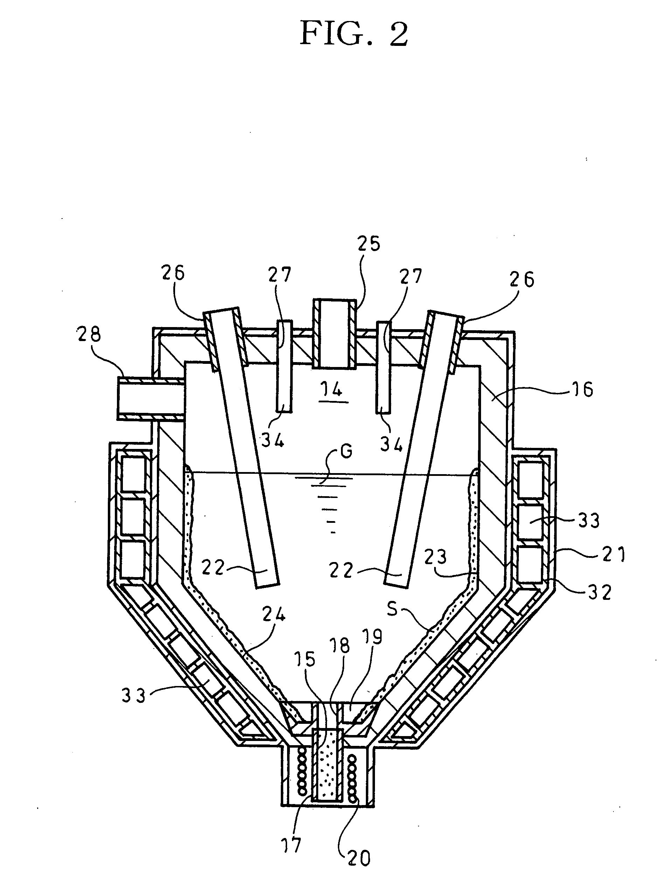

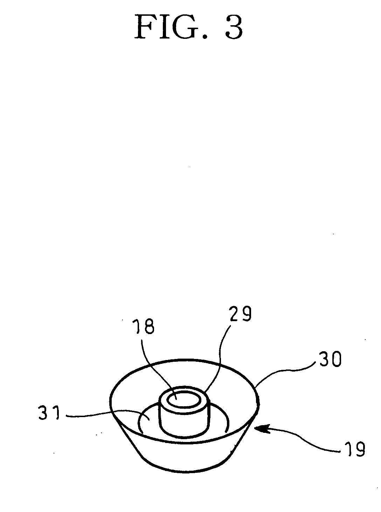

Figs. 2 and 3 shows an embodiment of a glass melter according to the invention which comprises a furnace body 16 with its refractory material defining a melt space 14 capable of retaining molten glass G and having an insertion port 15 at its bottom, a drain nozzle 17 inserted at its upper end to the port 15, a saucer member 19 fitted to an inner bottom center of the nozzle 17 and having an outflow port 18 contiguous with the nozzle 17, an induction heating coil 20 circumferentially surrounding the nozzle 17, an outer shell 21 housing the furnace body 16, and a pair of electrodes 22 with lower ends immersible in the molten glass G in the space 14.

The furnace body 3 has an inner cylindrical wall 23 and an inner funnel-shaped bottom wall 24 contiguous with a lower edge of the wall 23; the space 14 is confined by the walls 23 and 24.

Through a top of the furnace body 16 with openings 27, a material feed nozzle 25 and paired electrode supports 26 extend in communication with the space 14.

Through a side upper portion of the furnace body 16, an off gas nozzle 28 extends in communication with the space 14.

The saucer member 19 comprises a cylinder 29 providing a discharge port 18, an edge weir 30 which circumferentially surrounds the cylinder 29 and is contiguous with the inner bottom wall 24 in the form of funnel-shaped slope, and an annular recess 31 positioned between the cylinder 29 and the edge weir 30; the saucer member 19 is removable from the furnace body 16.

The outer shell 21 incorporates a cooling structural body 32 which circumferentially surrounds the furnace body 16.

This cooling structural body 32 has therein a cooling jacket 33 through which cooling medium may pass.

Through the electrode supports 26, upper ends of the electrodes 22 extend vertically slidably.

Through the openings 27 of the top of the furnace body 16, indirect heaters 34 extend so as to melt the vitrifiable material fed from the nozzle 25 to the space 14.

In the glass melter shown in Fig. 2, the vitrifiable material is supplied from the nozzle 25 to the space 14 and is melted by the indirect heaters 34; electrical current is passed between the electrodes 22 via the molten glass G, so that the molten glass G is kept hot by Joule heat so as not to be vitrified.

Outflow of the molten glass G from the space 14 to outside is prevented because of vitrification in the nozzle 17.

Furthermore, liquid such as water or gas such as air is continuously passed as cooling medium to the cooling jacket 33 to cool the furnace body 16 for formation of a solidified glass layer S which covers the walls 23 and 24 of the furnace body 16.

As a result, the molten glass G is prevented from contacting the furnace body 16 so that the furnace body 16 is prevented from being corroded by the hot molten glass G.

In this state, the vitrifiable material is fed to the space 14 where it is melted into the molten glass G, and the liquid waste from wet reprocessing of spent fuel is fed from the nozzle 25 to the space 14 and to admix with the molten glass G.

When the liquid waste is to be subjected to vitrification treatment, a vessel (not shown) is positioned just below the nozzle 17 and then electric current is passed to the coil 20 to heat the nozzle 17 to thereby melt the solidified glass in the nozzle 17, so that the molten glass G mixed with the liquid waste is allowed to flow down from the space 14 into the vessel.

Platinum metals contained in the high-level radioactive liquid waste slide down on the funnel-shaped or slanted wall 24 and are accumulated on the recess 31 so that the accumulated layer does not hinder flow-down or outflow of the molten glass G.

When an amount of the molten glass G with which the vessel has been filled substantially approaches to a predetermined value, heating of the nozzle 17 by the coil 20 is stopped and air is blown from the air injection pipe (not shown) to the nozzle 17, which causes re-vitrification in the nozzle 17 to prevent the molten glass G from flowing down through the nozzle 9.

Whenever a predetermined time period elapses, passing of the cooling medium to the cooling jacket 33 is stopped to melt the solidified glass layer S, and the nozzle 17 is heated by the coil 20, so that all of the molten glass G is discharged outside of the furnace body 16.

In this case, the molten glass G is kept hot by the indirect heater 34 so as to ensure the fluidity of the glass.

Thus, platinum metals attached to the solidified glass layer S and the like are also discharged outside of the furnace body 16.

Then, the saucer member 19 is replaced by a new one for accumulation of platinum metals on the recess 31 of the new saucer member 19; the electrodes 22 are also replaced by new ones so as to ensure an sufficient surface area of the electrodes 22.

Therefore, in the above-mentioned glass melter, the solidified glass layer S is formed to cover the walls 23 and 24 of the furnace body 16 so that the furnace body 16 is prevented from being corroded by the hot molten glass G. Moreover, the saucer member 16 on which platinum metals are accumulated and the electrodes 22 immersed in the molten glass G are adapted to be replaceable. As a result, the glass melter can have a long service life.

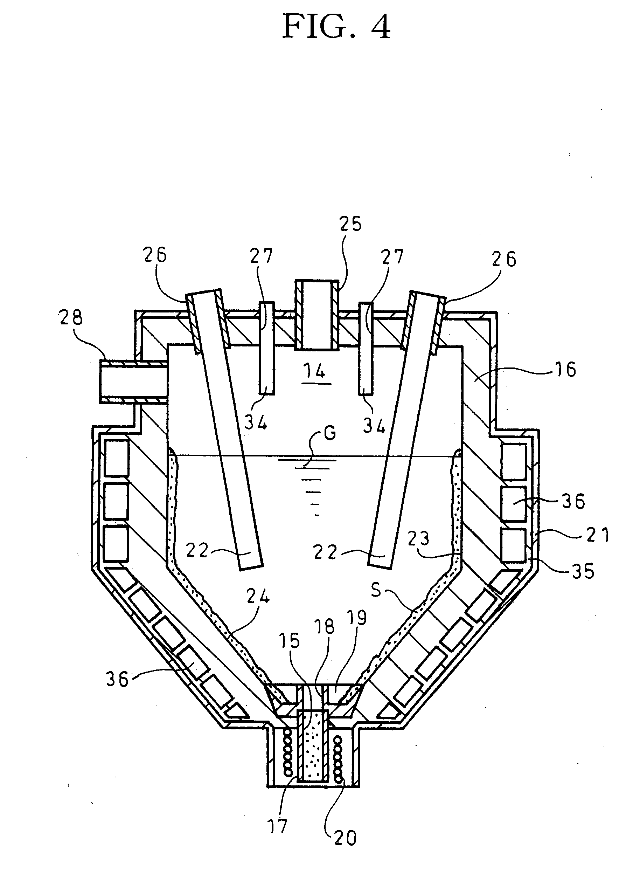

Fig. 4 shows a further embodiment of a glass melter according to the invention in which the parts similar to those in Figs. 2 and 3 are represented by the same reference numerals.

This glass melter has a bulge 35 which corresponds to the cooling structural body 32 in Fig. 2 and which is integral with the furnace body 16 through the refractory material. The bulge 35 has therein a cooling jacket 36 through which cooling medium may pass.

The glass melter shown in Fig. 4 also has effects and advantages similar to those of the glass melter shown in Figs. 2 and 3.

It is to be understood that a glass melter and a method for operating the same according to the invention is not limited to the above-mentioned embodiments and that various changes and modifications may be made without leaving the spirit of the invention. For example, the furnace body with no drain nozzle may be tilted to allow the molten glass to flow out; alternatively, the vitrifiable material may be continuously fed to the furnace body with no drain nozzle to allow the molten glass to overflow.

## Claims

1. A glass melter comprising a furnace body capable of retaining molten glass therein, an outer shell with a cooling jacket for surrounding said furnace body and a pair of vertically extending electrodes with lower ends immersible in the molten glass in the furnace body.

2. A glass melter as claimed in claim 1 further comprising a drain nozzle extending downward from an inner bottom of the furnace body, means for heating said nozzle and a saucer member removably fitted to the inner bottom of the furnace body and having an outflow port contiguous with the nozzle.

3. A method for operating a glass melter as claimed in claim 1 or 2 which comprises retaining molten glass in the furnace body, passing electric current between the paired electrodes to heat the glass and passing cooling medium through the cooling jacket to provide a solidified glass layer on an inside of the furnace body.

4. A method as claimed in claim 3 wherein, after the solidified glass layer has been provided, passing of the cooling medium through the cooling jacket is stopped to melt the solidified glass layer, and the molten glass and accumulated platinum metals in the furnace body are discharged outside.
